# EUROPEAN PATENT APPLICATION

(11) **EP 4 497 951 A1**
(43) Date of publication of application: **29.01.2025**
(21) Application number: 24176835.7
(22) Date of filing: 20.05.2024
(51) Int. Cl.: F04D 25/06, F04D 25/08, F04D 29/60

(54) **FAN WITH A CLAMPING ASSEMBLY**

(30) Priority: 28.07.2023 CN 202322029980 U
(71) Applicant: Nanjing Chervon Industry Co., Ltd., Nanjing, Jiangsu 211106 (CN)
(72) Inventor: ZHONG, Keqiong, Nanjing, Jiangsu 211106 (CN); CHEN, Zhijun, Nanjing, Jiangsu 211106 (CN); CAO, Pengpeng, Nanjing, Jiangsu 211106 (CN)
(74) Representative: Sun, Yiming

(57) **Abstract**

A fan includes: a support base; a fan assembly; a battery pack coupling portion located at an end of the fan adjacent to the support base and used for mounting a battery pack powering the fan assembly; and a clamping assembly disposed on the support base and used for clamping the support base to an external fixed component. The clamping assembly includes a first jaw, a second jaw, and an adjustment member. The adjustment member passes through the first jaw and the second jaw. The adjustment member is operated to increase or decrease an opening distance between the first jaw and the second jaw. The maximum opening distance formed between the first jaw and the second jaw is greater than or equal to 35 mm.

## Description

This application claims priority to Chinese Patent Application No. 202322029980.5 filed on July 28, 2023, the disclosure of which is incorporated herein by reference in its entirety.

### TECHNICAL FIELD

The present application relates to a power tool, especially to a fan.

### BACKGROUND

Due to different usage scenarios, a power tool in the related art, for example, a fan, often fails to lie on a horizontal plane directly and needs to be clamped on an external fixed component to be used. The fan generally includes a base, a drive assembly, a fan blade assembly, and a clamping assembly. The fan blade assembly is supported on the base. The drive assembly can drive fan blades in the fan blade assembly to rotate, thereby generating airflow. The clamping assembly is used for clamping the fan on the external fixed component.

The clamping assembly of the fan in the existing art generally includes a first jaw and a second jaw that are disposed opposite to each other. The maximum opening distance between the first jaw and the second jaw is relatively small, resulting in limited usage scenarios and poor clamping stability.

This part provides background information related to the present application, and the background information is not necessarily the existing art.

### SUMMARY

The present application adopts the technical solutions below. A fan includes: a support base; a fan assembly including fan blades; and a battery pack coupling portion located at an end of the fan adjacent to the support base and used for mounting a battery pack powering the fan assembly. The fan further includes a clamping assembly disposed on the support base and configured to clamp the support base to an external fixed component. The clamping assembly includes a first jaw, a second jaw, and an adjustment member, where the first jaw is closer to outer edges of the fan blades than the second jaw, the adjustment member passes through the first jaw and the second jaw, the adjustment member is operated to be capable of causing an opening distance between the first jaw and the second jaw to increase or decrease, and the maximum opening distance L formed between the first jaw and the second jaw is greater than or equal to 35 mm.

In some examples, a first threaded portion and a second threaded portion are spaced on the adjustment member, where the second jaw is connected to the second threaded portion, the second threaded portion is capable of causing the second jaw to move, the length of the first threaded portion along the axial direction of the adjustment member is a first length, and the length of the second threaded portion along the axial direction of the adjustment member is a second length.

In some examples, the second length is greater than the first length, and the difference between the second length and the first length is greater than or equal to 5 mm.

In some examples, the clamping assembly further includes a first pin and a second pin, where the first pin is inserted through the first jaw, the second pin is inserted through the second jaw, the first threaded portion is rotatably connected to the first pin, and the second threaded portion is rotatably connected to the second pin.

In some examples, the included angle between the connecting line from the center of the first pin to an edge of the first jaw and the plane where the fan is placed is a first included angle α, where α > 30°.

In some examples, the clamping assembly further includes a connecting rod connected to the support base, where the first jaw is connected to the connecting rod and is on one side of the connecting rod, and the second jaw is connected to the connecting rod and is on the other side of the connecting rod.

In some examples, the included angle between connecting lines from the center of the connecting rod to an edge of the first jaw and an edge of the second jaw respectively is a second included angle β, where 0° ≤ β ≤ 90°.

In some examples, an elastic pad is disposed on each of the first jaw and the second jaw and is in direct contact with the external fixed component.

In some examples, each of the first jaw and/or the second jaw includes a first clamping surface 511 and a second clamping surface 512, and the included angle between the first clamping surface 511 and the second clamping surface 512 is a third included angle γ, where 100° ≤ γ ≤ 150°.

In some examples, the battery pack is mounted below the clamping assembly.

A fan includes: a support base; a fan assembly including fan blades; and a battery pack coupling portion located at an end of the fan adjacent to the support base and used for mounting a battery pack powering the fan assembly. The fan further includes a clamping assembly disposed on the support base and configured to clamp the support base to an external fixed component. The clamping assembly includes a first jaw, a second jaw, and an adjustment member, where the first jaw is closer to outer edges of the fan blades than the second jaw, the adjustment member passes through the first jaw and the second jaw, the adjustment member is operated to be capable of causing an opening or closing angle between the first jaw and the second jaw to increase or decrease, and the maximum opening or closing angle formed between the first jaw and the second jaw is greater than or equal to 90°.

In some examples, the clamping assembly further includes a connecting rod connected to the support base, where the first jaw is connected to the connecting rod and is on one side of the connecting rod, and the second jaw is connected to the connecting rod and is on the other side of the connecting rod. The included angle between connecting lines from the center of the connecting rod to an edge of the first jaw and an edge of the second jaw respectively is a second included angle β, where 0° ≤ β ≤ 90°.

A power tool includes: a drive assembly; an output assembly driven by the drive assembly; and a battery pack coupling portion for mounting a battery pack powering the drive assembly. The power tool further includes a clamping assembly configured to clamp the power tool to an external fixed component. The clamping assembly includes a first jaw, a second jaw, and an adjustment member, where the first jaw is closer to the output assembly than the second jaw, the adjustment member passes through the first jaw and the second jaw, the adjustment member is operated to be capable of causing an opening distance between the first jaw and the second jaw to increase or decrease, and the maximum opening distance formed between the first jaw and the second jaw is greater than or equal to 35 mm.

A power tool includes: a support base; an output assembly for performing output work; a battery pack coupling portion formed on the support base and used for mounting a battery pack powering the output assembly; and a clamping assembly configured to clamp the power tool to an external fixed component. The clamping assembly includes a first jaw, a second jaw, a connecting rod, and an adjustment member, where the first jaw is closer to the output assembly than the second jaw, the second jaw is rotatably connected to the first jaw through the connecting rod, the adjustment member passes through the first jaw and the second jaw, and the adjustment member is operated to be capable of causing an opening distance between the first jaw and the second jaw to increase or decrease.

A power tool includes: an output assembly for performing output work; a battery pack coupling portion for mounting a battery pack powering the output assembly; and a clamping assembly configured to clamp the power tool to an external fixed component. The clamping assembly includes a first jaw, a second jaw, and an adjustment member, where the first jaw is closer to the output assembly than the second jaw, the first jaw is fixed and the second jaw approaches or moves away from the first jaw to decrease or increase an opening distance between the first jaw and the second jaw, and the maximum opening distance formed between the first jaw and the second jaw is greater than or equal to 35 mm.

A power tool includes: a support base, where the power tool is capable of being placed on a horizontal plane through the support base; an output assembly for performing output work; a battery pack coupling portion for mounting a battery pack powering the power tool; and a clamping assembly configured to clamp the power tool to an external fixed component. The distance H between the support base and the uppermost end of the clamping assembly is less than or equal to 10 cm.

In some examples, the distance H between the support base and the uppermost end of the clamping assembly is less than or equal to 9 cm.

### BRIEF DESCRIPTION OF DRAWINGS

FIG. 1 is a front view of a fan according to the present application;
FIG. 2 is a perspective view of a fan according to the present application;
FIG. 3 is a structural view of a clamping assembly of a fan according to the present application;
FIG. 4 is an exploded view of a clamping assembly of a fan according to the present application;
FIG. 5 is a structural view of an adjustment member of a clamping assembly of a fan according to the present application;
FIG. 6 is a sectional view of a partial structure of a fan with a clamping assembly opened according to the present application;
FIG. 7 is a sectional view of a partial structure of a fan with a clamping assembly clamped according to the present application;
FIG. 8 is an exploded view of a partial structure of a clamping assembly of a fan according to the present application;
FIG. 9 is a side view of a first jaw of a clamping assembly of a fan according to the present application;
FIG. 10 is a schematic view showing the mounting relationship between a battery pack coupling portion of a fan and a battery pack of the fan according to the present application;
FIG. 11 is a structural view showing a usage scenario of a power tool according to the present application;
FIG. 12 is a structural view showing another usage scenario of a power tool according to the present application;
FIG. 13 is a structural view of a fan according to an example of the present application at a first viewing angle;
FIG. 14 is a structural view of a fan according to an example of the present application at a second viewing angle;
FIG. 15 is a structural view of a battery pack according to an example of the present application;
FIG. 16 is a structural view of a coupling portion and a battery pack according to an example of the present application;
FIG. 17 is a structural view of a fan according to an example of the present application at a third viewing angle;
FIG. 18 is a structural view of a fan according to an example of the present application at a fourth viewing angle;
FIG. 19 is a structural view of another fan according to an example of the present application at a first viewing angle; and
FIG. 20 is a structural view of another fan according to an example of the present application at a second viewing angle.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear"" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

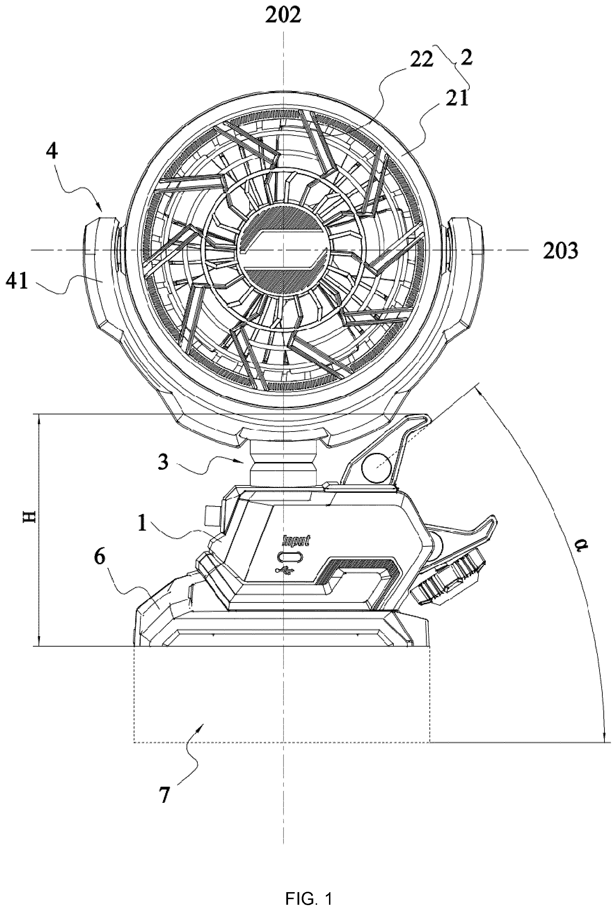

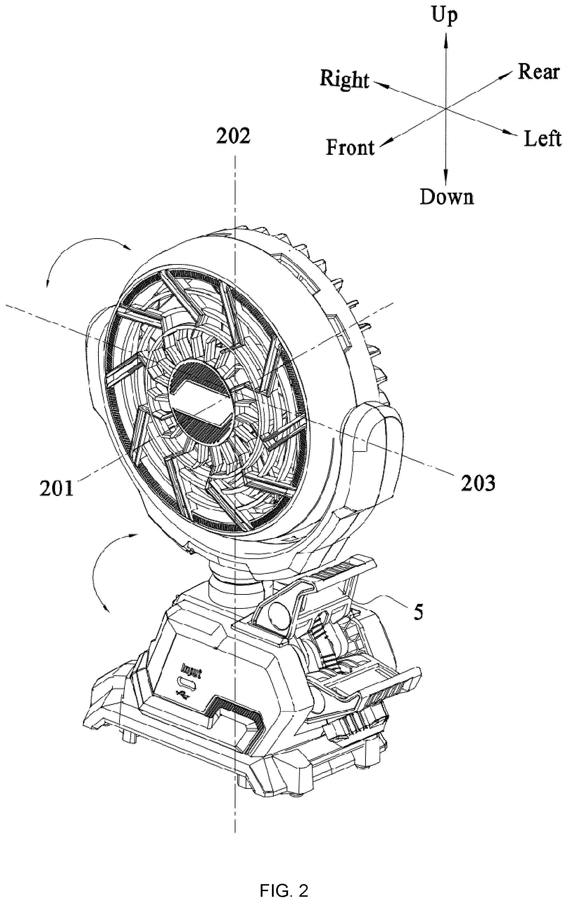

A fan is provided in this example. The fan is applicable in fields such as daily life and industrial production. As shown in FIGS. 1 and 2, the fan includes a support base 1, a fan assembly 2, and a drive assembly. The support base 1 has a placement plane to be supported on an external structure (such as a tabletop or the ground). The fan assembly 2 includes a support body 21, a rotating shaft, and fan blades 22. The support base 1 has a grille-shaped structure. The rotating shaft is rotatably disposed in the support base 1. The fan blades 22 are connected to the rotating shaft and enclosed in the support base 1. The drive assembly is used for driving the rotating shaft and the fan blades 22 to synchronously rotate about a rotation axis 201. In this example, the support base 1 has a circular outline. In another example, the outline of the support base 1 may be square, elliptical, or in another special shape. The shape of the outline of the support base 1 is not specifically limited here.

In some examples, as shown in FIG. 1, the fan further includes a first pivot structure 3. One end of the first pivot structure 3 is connected to the support base 1, and the other end of the first pivot structure 3 is connected to the fan assembly 2. The first pivot structure 3 supports the fan assembly 2. The first pivot structure 3 can rotate 360° about a first pivot axis 202. Thus, the direction of the first pivot structure 3 may be adjusted through the rotation so that the orientation of the fan assembly 2 is flexibly adjusted, thereby adjusting the direction of wind from the fan. Optionally, the first pivot structure 3 includes a fixed portion and a rotating portion. The fixed portion is fixed to the support base 1, and the rotating portion is fixed to the fan assembly 2. The rotating portion is rotatable about the first pivot axis 202 relative to the fixed portion. Thus, the fan assembly 2 rotates to change its direction relative to the support base 1.

As shown in FIG. 1, the fan assembly 2 further includes a second pivot structure 4. One end of the second pivot structure 4 is connected to the first pivot structure 3 and is specifically connected to the rotating portion. The other end of the second pivot structure 4 is pivotally connected to the support base 1. In this structure, the support base 1 can rotate 360° about a second pivot axis 203 relative to the second pivot structure 4, thereby further improving the flexibility with which the orientation of the fan assembly 2 is adjusted. Thus, it is convenient to adjust the direction of the fan and it is highly flexible to adjust the direction of the wind, thereby improving user experience. Optionally, the second pivot structure 4 includes pivot shafts and a support arm 41. The support arm 41 may have a semi-circular or U-shaped structure. A first hole and a second hole are provided on two opposite sides of the support arm 51 one to one. The pivot shafts and the support base 1 are fixedly connected to each other or integrally formed. An end of one of the pivot shafts and an end of the other one of the pivot shafts rotatably mate with the first hole and the second hole, respectively. In this manner, the support base 1 is rotatable about the second pivot axis 203. In an example, the extension line of each of the pivot shafts is collinear with the diameter of the support base 1, that is, the second pivot axis 203. Thus, the support base 1 can be caused to rotate more smoothly.

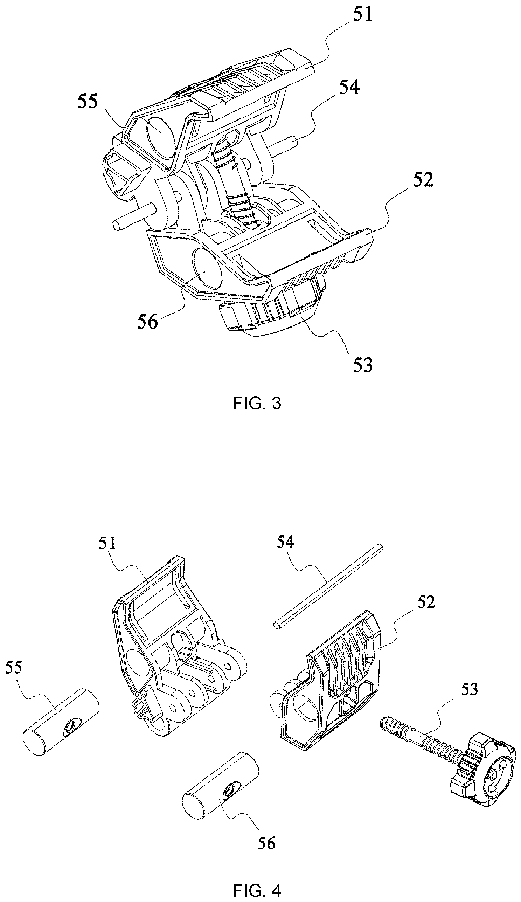

In some usage scenarios, no appropriate support surface can be found to support the support base 1 of the fan. In an example, as shown in FIG. 2, a clamping assembly 5 is disposed on the support base 1. The clamping assembly 5 is used for clamping the support base 1 to an external fixed component 100, thereby improving flexibility in the use of the fan. In this example, as shown in FIGS. 3 and 4, the clamping assembly 5 includes a first jaw 51, a second jaw 52, and an adjustment member 53. The first jaw 51 is closer to outer edges of the fan blades 22 than the second jaw 52. The adjustment member 53 passes through the first jaw 51 and the second jaw 52. The operation member 533 connected to the adjustment member 53 is operated to be capable of causing an opening distance between the first jaw 51 and the second jaw 52 to increase or decrease. The maximum opening distance L formed between the first jaw 51 and the second jaw 52 is greater than or equal to 35 mm.

The opening distance refers to the distance between the distal-most end of a region that is on the first jaw 51 and can perform clamping and the distal-most end of a region that is on the second jaw 52 and can perform clamping. The larger the opening distance, the more the places that can be clamped. The maximum closing or opening distance of the fan provided in this example can be 50 mm, 55 mm, or 60 mm. Compared with a fan in the existing art, the fan in this example is applicable to multiple working conditions, can be stably clamped at various places that are difficult to clamp, and has a wider range of application.

In this example, as shown in FIG. 1, the first pivot axis 202 does not pass through the clamping assembly 5, that is, the clamping assembly 5 is completely on the same side of the first pivot axis 202. In this structure, the distance H between the support base 1 and the uppermost end of the clamping assembly may be designed to be very small. In this example, H is less than or equal to 10 cm. Further, in this example, H is less than or equal to 9 cm. The distance H is small so that the overall height of the whole apparatus can be reduced. Therefore, a compact structure is applicable to more places.

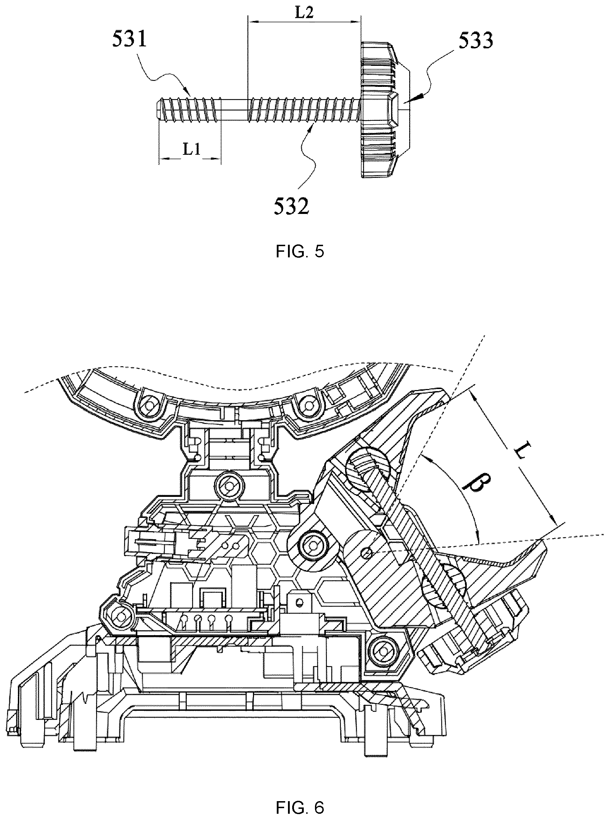

As shown in FIG. 5, a first threaded portion 531 and a second threaded portion 532 are spaced on the adjustment member 53. The handedness of the first threaded portion 531 is different from the handedness of the second threaded portion 532. The second jaw 52 is connected to the second threaded portion 532. The second threaded portion 532 can cause the second jaw 52 to move. With the threads with two types of handedness, the first jaw 51 and the second jaw 52 can be quickly opened and closed, thereby saving time spent in adjusting the clamping assembly 5. The length of the first threaded portion 531 along the axial direction of the adjustment member 53 is a first length L1, and the length of the second threaded portion 532 along the axial direction of the adjustment member 53 is a second length L2. The first length L1 may be the same as or different from the second length L2. In an example, the second length L2 is greater than the first length L1, and the difference between the second length L2 and the first length L1 is greater than or equal to 5 mm. Thus, the second jaw 52 connected to the second threaded portion 532 can have a large movement range, thereby implementing a larger opening distance.

In an example, the first length L1 is about 15 mm, and the second length L2 is about 22 mm. In an example, the first threaded portion 531 has 8 threads, and the second threaded portion 532 has 11 threads. In an example, each of the first threaded portion 531 and the second threaded portion 532 has a pitch of about 2 mm. The pitch is adjusted so that the opening or closing speed of the clamping assembly 5 is adjusted. The preceding specific parameters of the first threaded portion 531 and the second threaded portion 532 may be designed according to actual situations.

Based on the preceding structure, with continued reference to FIGS. 3 and 4, the clamping assembly 5 further includes a connecting rod 54 and a torsion spring (not shown in the figure). The connecting rod 54 is connected to the support base 1. The first jaw 51 is fixedly connected to the connecting rod 54 and is on one side of the connecting rod 54, and the second jaw 52 is connected to the connecting rod 54 and is on the other side of the connecting rod 54. The second jaw 52 and the first jaw 51 are disposed opposite to each other. The torsion spring is sleeved on the connecting rod 54, and two ends of the spring torsion are connected to the first jaw 51 and the second jaw 52, respectively. The torsion spring causes the first jaw 51 and the second jaw 52 to be in an open state.

In the preceding structure, the second jaw 52 is rotatably connected to the first jaw 51 through the connecting rod 54. The adjustment member 53 passes through the first jaw 51 and the second jaw 52. The adjustment member 53 is operated to be capable of causing the opening distance between the first jaw 51 and the second jaw 52 to increase or decrease. Compared with the manner that a second jaw 52 can only be translated relative to a first jaw 51 in the existing art, the first jaw 51 and the second jaw 52 are opened or closed more quickly and are quicker and more convenient to operate in the preceding solution of this example.

In this example, a clamping range of the clamping assembly 5 may be characterized by an opening or closing angle. As shown in FIG. 6, the included angle between connecting lines from the center of the connecting rod 54 to an edge of the first jaw 51 and an edge of the second jaw 52 respectively is a second included angle β, that is, the opening or closing angle, where 0° ≤ β ≤ 90°. In an example, the second included angle β is about 55°. The maximum opening or closing angle of the clamping assembly 5 can be 90°, and the clamping assembly 5 is applicable to a wide range of working conditions.

As shown in FIGS. 3 and 4, the clamping assembly 5 further includes a first pin 55 and a second pin 56. The first pin 55 is inserted through the first jaw 51, and the second pin 56 is inserted through the second jaw 52. The first threaded portion 531 is rotatably connected to the first pin 55, and the second threaded portion 532 is rotatably connected to the second pin 56. Optionally, the first threaded portion 531 rotatably mates with the first pin 55 through a bearing, and the second threaded portion 532 is inserted through the second pin 56 and threadedly mates with the second pin 56. When the adjustment member 53 is rotated, the second jaw 52 can be caused to approach or move away from the first jaw 51, thereby clamping or releasing an external fixed structure. Of course, the preceding structure is only one possible example of the clamping assembly 5. In another example, the structure of the clamping assembly 5 is not limited. Any structure that can implement a clamping function is applicable in this example. The first jaw 51 has a fixed position and the second jaw 52 approaches or moves away from the first jaw 51 so that the opening distance between the first jaw 51 and the second jaw 52 decreases or increases.

As shown in FIG. 1, the included angle between the connecting line from the center of the first pin 55 to the edge of the first jaw 51 and the plane where the fan is placed is a first included angle α, where α > 30°. The larger the angle is, the more scenarios the fan is applicable to.

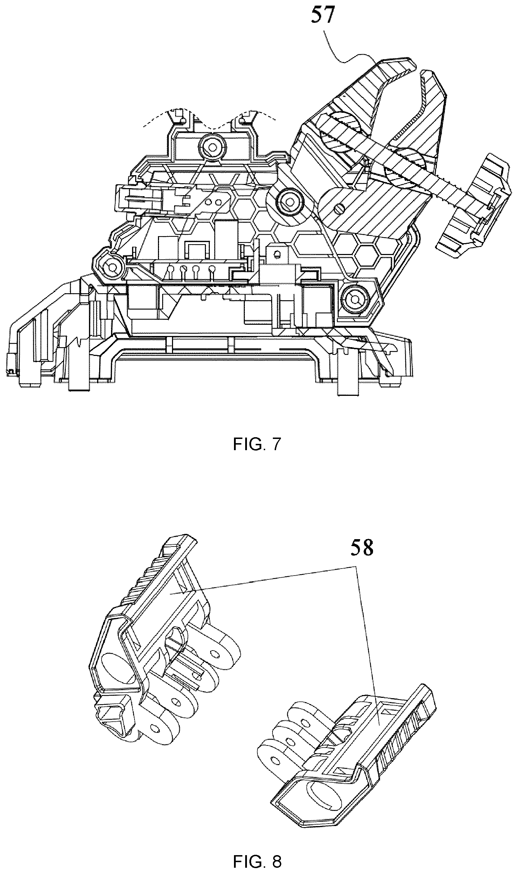

Further, as shown in FIG. 7, an elastic pad 57 is disposed on each of the first jaw 51 and the second jaw 52 and is in direct contact with the external fixed component 100. The elastic pad 57 is disposed so that the friction force between the jaw and the external fixed component 100 can be increased, thereby improving clamping stability. In addition, the jaw can be prevented from damaging the external fixed component 100. Optionally, as shown in FIG. 8, each of the first jaw 51 and the second jaw 52 is provided with a mounting slot 58 for mounting the elastic pad 57. The elastic pad 57 may be a rubber pad, a silica gel pad, or a soft pad that has elasticity and is made of another material.

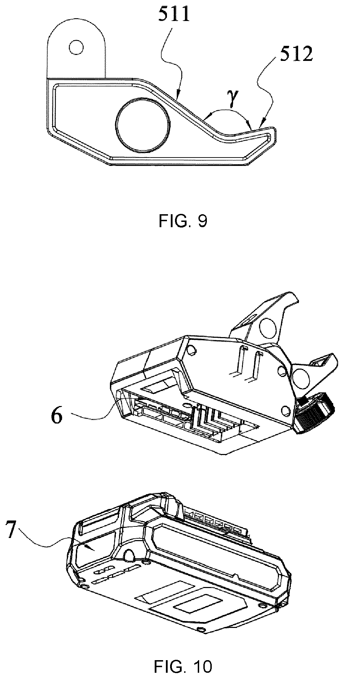

Referring to FIG. 9, each of the first jaw 51 and/or the second jaw 52 includes a first clamping surface 511 and a second clamping surface 512. The included angle between the first clamping surface 511 and the second clamping surface 512 is a third included angle γ, where 100° ≤ γ ≤ 150°. The angle range can cause the jaws to have greater clamping forces and greater clamping stability. Thus, the jaws are applicable to scenarios where the clamping is not easily performed. In an example, the third included angle γ is greater than or equal to 100 degrees and less than or equal to 150 degrees. In another example, the third included angle γ is greater than or equal to 110 degrees and less than or equal to 140 degrees. In another example, the third included angle γ is greater than or equal to 120 degrees and less than or equal to 140 degrees. Only several ranges are listed here. The third included angle γ may be selected according to a specific working condition in actual design.

As shown in FIGS. 1 and 10, the fan further includes a battery pack coupling portion 6 and a battery pack 7. The battery pack coupling portion 6 is located at an end of the fan adjacent to the support base 1. The battery pack coupling portion 6 is formed on the support base 1. In this example, the battery pack coupling portion 6 is configured on the support base 1, and the battery pack 7 is detachably mounted on the battery pack coupling portion 6. After the battery pack 7 is mounted on the battery pack coupling portion 6, the battery pack 7 can power the drive assembly. Specifically, the battery pack 7 may be a rechargeable battery used by the power tool. In some examples, the nominal voltage of the battery pack 7 is greater than or equal to 12 V and less than or equal to 24 V. In some examples, the nominal voltage of the battery pack 7 is 12 V. In some examples, the nominal voltage of the battery pack 7 is 20 V. The battery pack coupling portion 6 and the battery pack 7 are disposed so that the fan can be used normally without being connected to an external power supply. Moreover, when the power of the battery pack 7 runs out, the battery pack 7 can be replaced by a new battery pack 7. Thus, the fan can be used continuously, further improving the flexibility in the use of the fan. In this example, the battery pack coupling portion 6 includes several contacts. The contacts are electrically connected to the drive assembly. Correspondingly, the battery pack 7 includes several terminals. After the battery pack 7 is mechanically connected to the battery pack coupling portion 6, the terminals are electrically connected to the contacts just correspondingly so that the drive assembly can be powered. Optionally, the battery pack 7 may be detachably connected to the battery pack coupling portion 6 in the manner of insertion, threaded connection, or the like, which is not limited here.

In this example, the drive assembly includes an electric motor. The output end of the electric motor is connected to the rotating shaft of the fan assembly 2 to drive the fan blades 22 to rotate. Further, the electric motor may be a speed regulation motor so that the rotational speed of the fan blades 22 is adjustable. In another example, the electric motor may be an ordinary electric motor. However, the fan is further equipped with a governor. The governor and the electric motor cooperate with each other so that the rotational speed of the fan is adjustable.

In this example, the drive assembly is disposed in the support base 1 and used for driving the fan blades 22 of the fan assembly 2 to rotate.

A power tool is provided in this example. The power tool includes an output assembly 300, a battery pack coupling portion, and a clamping assembly. The output assembly 300 is used for performing output work. The battery pack coupling portion is used for mounting a battery pack powering the output assembly 300. The clamping assembly is configured to clamp the power tool to an external fixed component. Only parts different from example one are specifically described below. Parts in example two that are the same as those in example one are not described again.

The clamping assembly 5 includes a first jaw 51, a second jaw 52, and an adjustment member 53. The first jaw 51 is closer to the output assembly 300 than the second jaw 52. The adjustment member 53 passes through the first jaw 51 and the second jaw 52. The adjustment member 53 is operated to be capable of causing an opening distance between the first jaw 51 and the second jaw 52 to increase or decrease. Thus, the release or clamping of the clamping assembly 5 is implemented. The maximum opening distance formed between the first jaw 51 and the second jaw 52 is greater than or equal to 35 mm. The opening distance refers to the distance between the distal-most end of a region that is on the first jaw 51 and can perform clamping and the distal-most end of a region that is on the second jaw 52 and can perform clamping. The larger the opening distance, the more the places that can be clamped. The maximum closing or opening distance of the power tool provided in this example can be 50 mm, 55 mm, or 60 mm. Compared with a power tool in the existing art, the power tool in this example is applicable to multiple working conditions, can be stably clamped at various places that are difficult to clamp, and has a wider range of application.

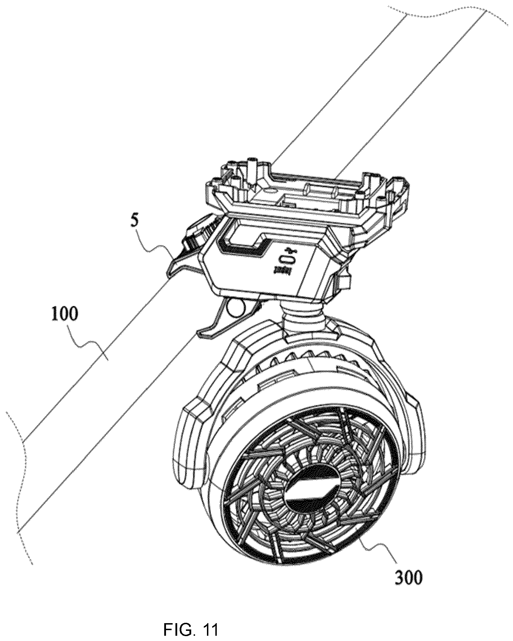

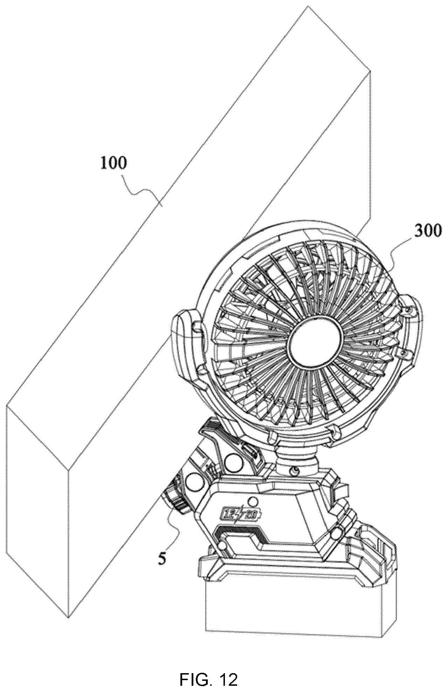

FIGS. 11 and 12 show two mounting manners of the fan in FIGS. 1 to 10. FIG. 11 shows a usage scenario of the power tool provided in this example. The external fixed component 100 has a rod-shaped structure. Due to a space limitation, the power tool can only be inverted and suspended during use. The power tool can be stably clamped to the external fixed component 100 to be used with high security and stability.

FIG. 12 shows another usage scenario of the power tool provided in this example. The external fixed component 100 has a structure in the shape of a thick plate. Generally, it is difficult to clamp a power tool to the external fixed component 100. The power tool can be stably clamped to the external fixed component 100 to be used with high security and stability.

It is to be noted that in addition to the preceding fan, the clamping assembly 5 involved in the present application is also applicable to other types of power tools. In an example, an audio device may also use the clamping assembly 5 involved in the present application. In an example, a lamp may also use the clamping assembly 5 involved in the present application. In an example, a test device may also use the clamping assembly 5 involved in the present application. That is to say, a specific output manner of the output assembly 300 is changed so that a specific work type of the power tool can be changed.

The power tool in the example is specifically a pole power tool, which is specifically a string trimmer. It is to be understood that the power tool may be a handheld power tool, for example, a drill, a pruner, or a sander. Alternatively, the power tool may be a table tool, for example, a table saw or a miter saw. Alternatively, the power tool may be a hand-push power tool, for example, a hand-push mower or a hand-push snow thrower. Alternatively, the power tool may be a riding power tool, for example, a riding mower, a riding vehicle, or an all-terrain vehicle. Alternatively, the power tool may be a robotic tool, for example, a robotic mower or a robotic snow thrower.

In some examples, the power tool may be an electric drill, an electric lamp, an electric vehicle, or the like. In some examples, the power tool may be an engine power tool, for example, an engine string trimmer or an engine mower.

In some examples, the power tool may be a garden tool, for example, a pruner, a blower, a mower, or a chain saw. Alternatively, the power tool may be a decoration tool, for example, a screwdriver, a nail gun, a circular saw, or a sander.

In some examples, the power tool may be a vegetation maintenance tool, for example, a string trimmer, a mower, a pruner, or a chain saw. Alternatively, the power tool may be a cleaning tool, for example, a blower, a snow thrower, or a washer. Alternatively, the power tool may be a drilling tool, for example, a drill, a screwdriver, a wrench, or an electric hammer. Alternatively, the power tool may be a sawing tool, for example, a reciprocating saw, a jigsaw, or a circular saw. Alternatively, the power tool may be a table tool, for example, a table caw a miter caw a metal cutter, or an electric router. Alternatively, the power tool may be a sanding tool, for example, an angle grinder or a sander. Alternatively, the power tool may be a non-motorized electrical device, for example, a lamp, an audio device, or a test device.

It is to be understood that any power device with a motor or an electric motor may adopt the technical solution disclosed in this example. Any power device adopting the technical solution disclosed in this example falls within the scope of the present application. For example, the power device may be a power head. The power head includes a motor or an electric motor and is configured to be adapted to some output assemblies 300 to implement the function of the tool.

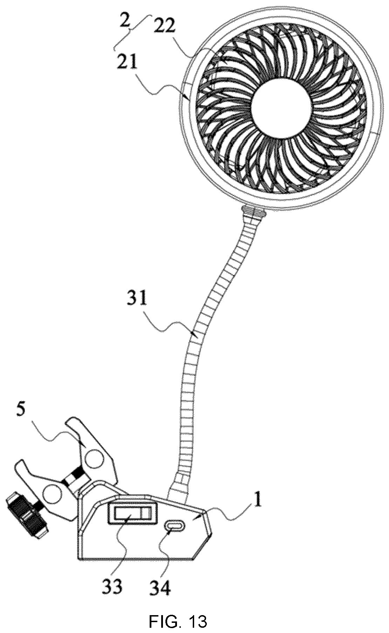

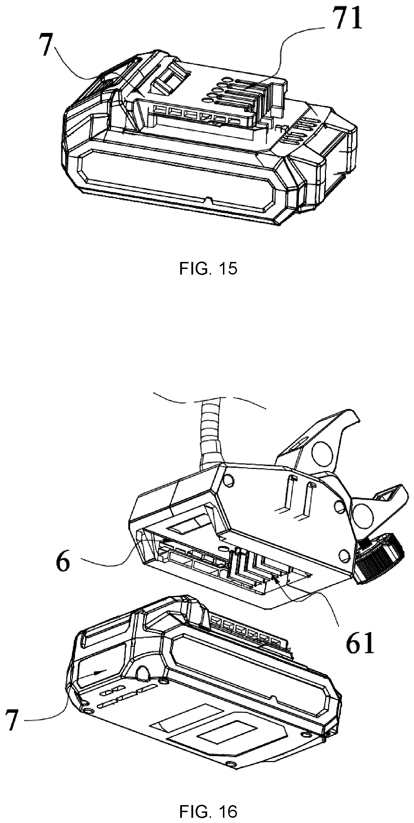

FIGS. 13 to 20 disclose examples of the clamping assembly 5 in other fans.

In some examples, as shown in FIG. 13, a fan further includes a flexible shaft assembly 31. One end of the flexible shaft assembly 31 is connected to a support base 1, and the other end of the flexible shaft assembly 31 is connected to a fan assembly 2. The flexible shaft assembly 31 supports the fan assembly 2. The extension direction of the flexible shaft assembly 31 is adjustable. Therefore, the extension direction of the flexible shaft assembly 31 is adjusted through a twist so that the orientation of the fan assembly 2 can be flexibly adjusted, thereby adjusting the direction of wind from the fan. The fan assembly 2 can be adjusted through the flexible shaft assembly 31 in a left and right direction, an up and down direction, and a front and rear direction simultaneously. Thus, it is convenient to adjust the direction of the fan and it is highly flexible to adjust the direction of the wind, thereby improving user experience. Optionally, the total length of the flexible shaft assembly 31 may be selected and set according to actual requirements and is not limited here.

In some examples, as shown in FIG. 13, the fan in this example further includes a Type-C interface 34 electrically connected to a drive assembly. Further, the fan in this example further includes a power cord (not shown). One end of the power cord can be inserted into the Type-C interface 34, and the other end of the power cord is configured to be inserted into an external power supply (such as a socket or wall jacks), thereby powering the drive assembly. On the one hand, the Type-C interface 34 is disposed so that the power cord of the fan can be independently disposed. Before the fan is moved, the power cord may be detached. Thus, the power cord will not be dragged and damaged. On the other hand, in the existing art, many electrical devices have power cords whose output terminals are matched with the Type-C interface 34. Thus, the fan can share the power cord with other electrical devices, and it is more convenient for the user to use the fan. In this example, one end of the power cord to be inserted into the external power supply includes one or more of a two-pin plug, a three-pin plug, and a USB plug, which is not specifically limited here.

In this example, as shown in FIG. 13, the Type-C interface 34 is disposed on a support body 21 so that the risk can be reduced that the flexible shaft assembly 31 is wound with the power cord when being adjusted.

As shown in FIG. 13, the fan further includes a switch 33. The switch 33 is electrically connected to the drive assembly and is configured to cause fan blades 22 to start or stop rotating. The switch 33 is disposed so that it is more convenient to use the fan. Optionally, the switch 33 may be a simple ON/OFF switch or a switch with a speed regulation function, which is not limited here. Further, in this example, the switch 33 is disposed on the support base 1, and in other examples, the switch 33 may be disposed on the support base 1 of the fan assembly 2, which is not specifically limited here.

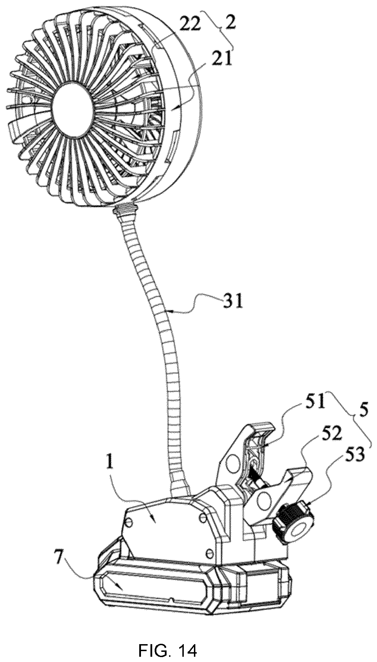

As shown in FIGS. 14 to 16, the fan further includes a battery pack coupling portion 6 and a battery pack 7. The battery pack coupling portion 6 is located at an end of the fan adjacent to the support base. In this example, the battery pack coupling portion 6 is configured on the support base 1, and the battery pack 7 is detachably mounted on the battery pack coupling portion 6. After the battery pack 7 is mounted on the battery pack coupling portion 6, the battery pack 7 can power the drive assembly. Specifically, the battery pack 7 may be a rechargeable battery used by a power tool. In some examples, the nominal voltage of the battery pack 7 is greater than or equal to 12 V and less than or equal to 24 V. In some examples, the nominal voltage of the battery pack 7 is 12 V. In some examples, the nominal voltage of the battery pack 7 is 20 V. The battery pack coupling portion 6 and the battery pack 7 are disposed so that the fan can be used normally without being connected to the external power supply. Moreover, when the power of the battery pack 7 runs out, the battery pack 7 can be replaced by a new battery pack 7. Thus, the fan can be used continuously, further improving flexibility in the use of the fan. In this example, the battery pack coupling portion 6 includes several contacts 61. The contacts 61 are electrically connected to the drive assembly. Correspondingly, the battery pack 7 includes several terminals 71. After the battery pack 7 is mechanically connected to the battery pack coupling portion 6, the terminals 71 are electrically connected to the contacts 61 just correspondingly so that the drive assembly can be powered. Optionally, the battery pack 7 may be detachably connected to the battery pack coupling portion 6 in the manner of insertion, threaded connection, or the like, which is not limited here.

In this example, the drive assembly includes an electric motor. The output end of the electric motor is connected to the rotating shaft of the fan assembly 2 to drive the fan blades 22 to rotate. Further, the electric motor may be a speed regulation motor so that the rotational speed of the fan blades 22 is adjustable. In another example, the electric motor may be an ordinary electric motor. However, the fan is further equipped with a governor. The governor and the electric motor cooperate with each other so that the rotational speed of the fan is adjustable.

Optionally, in some examples, the fan includes a nozzle and a water storage tank (not shown), so the fan can implement a spray function.

Optionally, in some examples, the drive assembly is connected to the support base 1 of the fan assembly 2. In this configuration manner, it is convenient for the drive assembly to drivingly mate with the fan blades 22.

In this example, the drive assembly is disposed in the support base 1. The flexible shaft assembly 31 includes a flexible drive shaft and a sheath that is sleeved on the outside of the flexible drive shaft and can be bent. One end of the sheath is connected to the support base 1, and the other end of the sheath is connected to the support base 1 of the fan assembly 2. One end of the flexible drive shaft is rotatably supported on the support base 1 and is drivingly connected to the drive assembly, and the other end of the flexible drive shaft is rotatably supported on the support base 1 and drivingly mates with the fan blades 22. On the one hand, the flexible drive shaft cooperates with the sheath to support the fan assembly 2, reducing the vibration of the fan during work. Thus, stability is improved. On the other hand, the flexible drive shaft implements the power transmission between the drive assembly and the fan blades 22.

In this example, the one end of the flexible drive shaft is rotatably supported on the support base 1 through a bearing and is connected to the output shaft of the electric motor, and the other end of the flexible drive shaft is rotatably supported on the support base 1 of the fan assembly 2 through a bearing and is connected to the rotating shaft of the fan assembly 2. When the electric motor outputs rotational movement, the flexible drive shaft drives the rotating shaft to rotate together, thereby implementing the rotation of the fan blades 22. It is to be noted that the flexible drive shaft that is adjustable in the extension direction and can implement the rotation and the transmission specifically belongs to the existing art. The details are not repeated here. Further, two ends of the sheath may be connected to the support base 1 and the support base 1 through threaded connection, engagement, or the like, respectively. Those skilled in the art may select and configure a connection manner according to actual requirements, which is not limited here.

In some usage scenarios, no appropriate support surface can be found to support the support base 1 of the fan. In an example, as shown in FIG. 14, the clamping assembly 5 is disposed on the support base 1. The clamping assembly 5 is used for clamping the support base 1 to an external fixed component, thereby improving the flexibility in the use of the fan. In this example, as shown in FIG. 14, the clamping assembly 5 includes a first jaw 51, a second jaw 52, a jaw shaft, a torsion spring, and an adjustment member 53. The jaw shaft is connected to the support base 1. The first jaw 51 is fixedly connected to the support base 1 and is located on a side of the jaw shaft. The second jaw 52 is disposed opposite to the first jaw 51 and is located on the other side of the jaw shaft. Two ends of the torsion spring that are sleeved on the jaw shaft are connected to the first jaw 51 and the second jaw 52, respectively. The torsion spring causes the first jaw 51 and the second jaw 52 to be in an open state. One end of the adjustment member 53 rotatably mates with the first jaw 51 through a bearing, and the other end of the adjustment member 53 is inserted through the second jaw 52 and threadedly mates with the second jaw 52. When the adjustment member 53 is rotated, the second jaw 52 can be caused to approach the first jaw 51, thereby clamping an external fixed structure. Of course, the preceding structure is only one possible example of the clamping assembly 5. In another example, the structure of the clamping assembly 5 is not limited. Any structure that can implement a clamping function is applicable in this example.

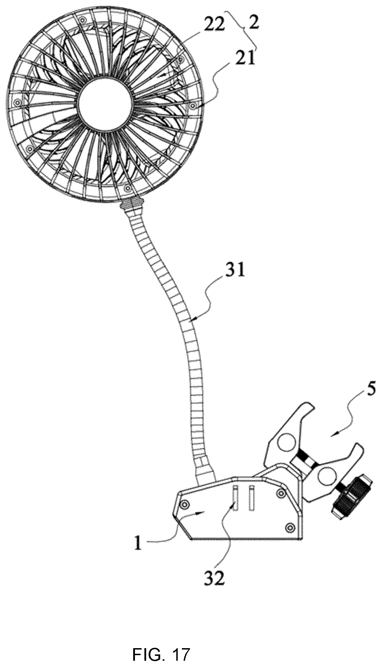

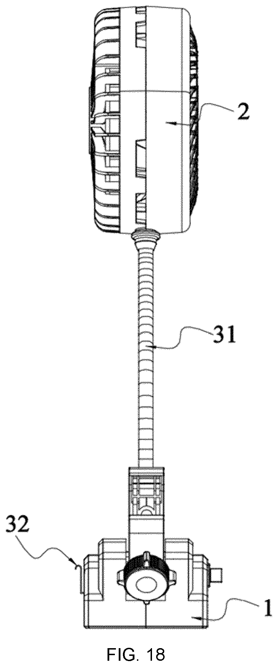

In this example, as shown in FIGS. 17 and 18, at least one hook 32 is disposed on the support base 1 and is used for hooking the support base 1 to the external fixed component. Thus, the flexibility of positions where the fan can be placed is further improved. Optionally, one, two, or more hooks 32 may be provided, and the number of hooks 32 is not specifically limited here. Further, the at least one hook 32 may be disposed on one or more sidewalls of the support base 1, which is flexibly adjusted according to actual requirements. Optionally, the at least one hook 32 may be integrally formed with the support base 1 through injection molding or may be connected to the support base 1 through a fastener.

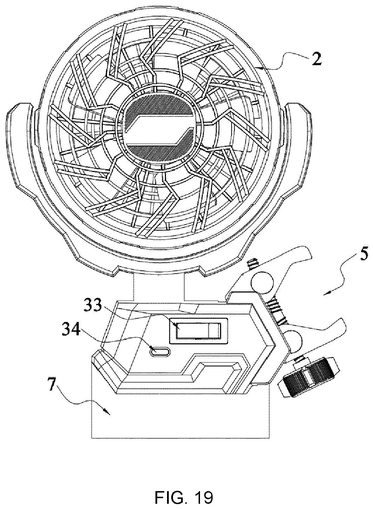

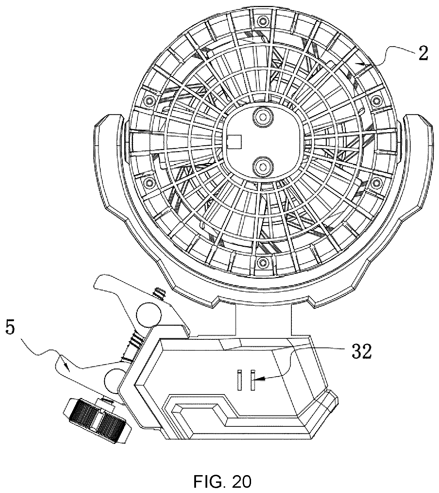

In some examples, as shown in FIGS. 19 and 20, the fan includes a support base 1, a fan assembly 2, and a drive assembly. The fan assembly 2 includes a support body 21 and fan blades 22. The support base 1 of the fan assembly 2 is directly connected to the support base 1. The drive assembly is disposed in the support base 1 and used for driving the fan blades 22 of the fan assembly 2 to rotate. In this example, the fan includes a clamping assembly 5 connected to the support base 1 and hooks 32 connected to the support base 1. The fan also includes a switch 33 for turning on or off the drive assembly. The fan also includes a Type-C interface 34 electrically connected to the drive assembly. Specific functions and technical effects of the clamping assembly 5, the hooks 32, the switch 33, and the Type-C interface 34 are the same as those described above. The details are not repeated here.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A fan, comprising:
a support base (1);
a fan assembly (2) comprising fan blades(22); and
a battery pack coupling portion (6) used for mounting a battery pack (7) powering the fan assembly;
wherein the fan further comprises:
a clamping assembly (5) disposed on the support base and configured to clamp the support base to an external fixed component;
wherein the clamping assembly comprises a first jaw (51), a second jaw (52), and an adjustment member (53), wherein the first jaw is closer to the fan blades than the second jaw, the adjustment member passes through the first jaw and the second jaw, the adjustment member is operated to be capable of increasing or decreasing an opening distance between the first jaw and the second jaw, and a maximum opening distance (L) formed between the first jaw and the second jaw is greater than or equal to 35 mm.

2. The fan according to claim 1, wherein a first threaded portion (531) and a second threaded portion (532) are spaced on the adjustment member, wherein the second jaw is connected to the second threaded portion, the second threaded portion permitting the second jaw to move along.

3. The fan according to claim 2, wherein a length of the first threaded portion along an axial direction of the adjustment member is a first length (L1), and a length of the second threaded portion along the axial direction of the adjustment member is a second length (L2), and the second length is greater than the first length, and a difference between the second length and the first length is greater than or equal to 5 mm.

4. The fan according to claim 2, wherein the clamping assembly further comprises a first pin (55) and a second pin (56), wherein the first pin is inserted through the first jaw, the second pin is inserted through the second jaw, the first threaded portion is rotatably connected to the first pin, and the second threaded portion is rotatably connected to the second pin.

5. The fan according to claim 4, wherein an included angle between a connecting line from a center of the first pin to an edge of the first jaw and a plane where the fan is placed is a first included angle α, wherein α > 30°.

6. The fan according to claim 2, wherein the clamping assembly further comprises a connecting rod (54) connected to the support base, wherein the first jaw is connected to the connecting rod and is on one side of the connecting rod, and the second jaw is connected to the connecting rod and is on another side of the connecting rod.

7. The fan according to claim 6, wherein an included angle between connecting lines from a center of the connecting rod to an edge of the first jaw and an edge of the second jaw respectively is a second included angle β, wherein 0° ≤ β ≤ 90°.

8. The fan according to any one of claims 1 to 7, wherein an elastic pad (57) is disposed on each of the first jaw and the second jaw and is in direct contact with the external fixed component.

9. The fan according to any one of claims 1 to 7, wherein each of the first jaw and/or the second jaw comprises a first clamping surface (511) and a second clamping surface (512), and an included angle between the first clamping surface and the second clamping surface is a third included angle γ, wherein 100° ≤ γ ≤ 150°.

10. The fan according to any one of claims 1 to 7, wherein the battery pack is mounted below the clamping assembly.

11. The fan according to claim 1, wherein a distance H between the support base and an uppermost end of the clamping assembly is less than or equal to 10 cm.

12. The fan according to claim 1, wherein a distance H between the support base and an uppermost end of the clamping assembly is less than or equal to 9 cm.

13. The fan according to claim 1, further comprising a drive assembly and a Type-C interface (34), wherein the drive assembly is used for driving the fan blades to rotate, the Type-C interface is electrically connected to the drive assembly, and the Type-C interface is configured such that a power cord is capable of being plugged into the Type-C interface to power the drive assembly.

14. The fan according to claim 1, further comprising a flexible shaft assembly (31), wherein one end of the flexible shaft assembly is connected to the support base, another end of the flexible shaft assembly is connected to the fan assembly, and an extension direction of the flexible shaft assembly is adjustable.

15. The fan according to claim 13, further comprising a switch (33) electrically connected to the drive assembly and configured to cause the fan blades to start or stop rotating.
